# EUROPÄISCHE PATENTSCHRIFT

(11) **EP 3 545 132 B1**
(45) Veröffentlichungstag und Bekanntmachung des Hinweises auf die Patenterteilung: **14.10.2020**
(21) Anmeldenummer: 18772721.9
(22) Anmeldetag: 07.08.2018
(51) Int. Cl.: E01B 11/18, E01B 29/42, E01B 29/46, B23K 9/00, B23K 9/038, B23K 9/16, B23K 9/23, B23K 37/06

(54) **ANORDNUNG, SCHWEISSMANSCHETTE UND VERFAHREN ZUM STOSS-SCHWEISSEN VON SCHIENENBRÜCHEN**
ARRANGEMENT, WELDING SLEEVE AND METHOD FOR BUTT-WELDING OF RAIL FRACTURES
APPAREIL, MANCHON À SOUDER ET PROCÉDÉ DE SOUDURE BOUT À BOUT DE FRACTURES DE RAIL

(30) Priorität: 09.08.2017 DE 102017118131
(43) Veröffentlichungstag der Anmeldung: 02.10.2019
(73) Patentinhaber: SEALABLE Solutions GmbH, 99880 Waltershausen (DE)
(72) Erfinder: KLUG, Matthias, 99817 Eisenach (DE); RÜDT, Andrea, 79771 Klettgau-Bühl (DE)
(74) Vertreter: Stüven, Ralf
(86) Internationale Anmeldenummer: PCT/DE2018/200073
(87) Internationale Veröffentlichungsnummer: WO 2019/029776

(56) Entgegenhaltungen:
- EP-B1- 1 347 098
- DE-C- 668 972
- JP-A- 2009 074 245

## Beschreibung

Die Erfindung betrifft eine Anordnung, eine Schweißmanschette und ein Verfahren zum Stoßschweißen eines Spaltes in einer Bahnschiene, insbesondere zum Stoßschweißen eines Schienenbruchs.

Schienenbrüche, beispielsweise aufgrund von Materialermüdung oder unsachgemäßer Belastung, treten regelmäßig auf und müssen repariert werden, um ein sicheres Befahren des Gleises zu ermöglichen. Bislang wird ein Bruch zunächst provisorisch gesichert, indem in Längsrichtung des Gleises eine den Bruch überbrückende Lasche mit der Schiene verschraubt wird. Hierzu muss gegebenenfalls der Belag seitlich des Gleises entfernt und der freigelegte Bereich nach Anbringen der Lasche provisorisch wieder verfüllt werden. Die eigentliche Reparatur, d.h. Stoßschweißung, erfolgt meist später und kann mit der montierten herkömmlichen Lasche nicht direkt durchgeführt werden. Vielmehr müssen die Lasche und gegebenenfalls das zur Verfüllung des freigelegten Arbeitsbereichs verwendete Verfüllmaterial zunächst wieder entfernt werden. Anschließend erfolgt die Reparaturschweißung (Lichtbogenschweißung), indem der Schienenfuß verschweißt wird, zur Schweißbadsicherung Kupferbacken montiert und Schienensteg und Schienenkopf verschweißt werden (s. z.B. Verkehrsbetriebe Zürich: VBZ-Handbuch zur Durchführung von Schienenschweiss- und Schleifarbeiten (ausführender Teil), WPS 16-18, VBZ R 100.2, Rev. 7, Dezember 2011; Basler Verkehrs-Betriebe: BVB-Handbuch zur Durchführung von Schienenschweiss- und Schleifarbeiten (ausführender Teil), WPS 16-18, 30.11.2014). Dieses Verfahren ist aufwändig und teuer.

JP 2009 074245 A offenbart eine Anordnung, umfassend eine Schiene und eine Schweißmanschette, welche eine die Schiene an deren erster Längsseite in Längsrichtung flankierende erste Lasche und eine die Schiene an deren zweiter Längsseite in Längsrichtung flankierende zweite Lasche umfasst, und wobei die erste Lasche und die zweite Lasche jeweils außerhalb des Spaltbereichs mindestens an dem Schienensteg, einem Teil des Schienenkopfes und einem Teil des Schienenfußes anliegen.

Aufgabe der vorliegenden Erfindung ist daher, eine Anordnung, eine Schweißmanschette und ein Verfahren zur Vereinfachung des Reparaturschweißens von Schienenbrüchen bereit zu stellen.

Zur Lösung der Aufgabe stellt die Erfindung in einem ersten Aspekt eine Anordnung bereit, umfassend
a) eine Schiene mit einem Schienenkopf, einem Schienensteg und einem Schienenfuß, wobei die Schiene in einem Spaltbereich einen vom Schienenkopf zum Schienenfuß verlaufenden durch Schweißen zu verschließenden oder verschlossenen Spalt aufweist, und
b) eine Schweißmanschette, die die Schiene an deren beiden Längsseiten in einem den Spaltbereich umfassenden Schienenbereich in Längsrichtung flankiert, den Spalt überbrückt und in Bezug auf die Längsrichtung der Schiene beidseitig des Spaltes mit der Schiene fest verbunden ist, wobei die Schweißmanschette eine die Schiene an deren erster Längsseite in Längsrichtung flankierende erste Lasche und eine die Schiene an deren zweiter Längsseite in

Längsrichtung flankierende zweite Lasche umfasst, und wobei die erste Lasche und die zweite Lasche jeweils außerhalb des Spaltbereichs mindestens an dem Schienensteg, einem Teil des Schienenkopfes und einem Teil des Schienenfußes anliegen, und jeweils im Spaltbereich von dem Schienensteg und dem Teil des Schienenkopfes beabstandet sind, so dass im Spaltbereich zu beiden Längsseiten der Schiene mindestens im Bereich des Schienensteges und des Teils des Schienenkopfes ein den Spalt umgebender von den Laschen begrenzter Hohlraum oder Kanal gebildet ist.

Der Kerngedanke der Erfindung liegt darin, im Falle eines Schienenbruchs eine in besonderer Weise ausgestaltete Schweißmanschette im Bereich des Bruches mit der Schiene zu verbinden, wobei die Schweißmanschette nicht nur zur temporären bzw. provisorischen Fixierung des Bruches, sondern auch als Schweißbadsicherung für die anschließende Reparaturschweißung dient. Die vorzugsweise aus Metall gefertigte Schweißmanschette verbleibt auch nach der Stoßschweißung an der Schiene. Um die bei der Stoßschweißung mittels Lichtbogenschweißens erforderliche Pendelbewegung der Elektrode zu ermöglichen, liegt die Schweißmanschette im Spaltbereich nicht unmittelbar an der Schiene an, sondern ist dort von der Schiene ausreichend beabstandet, um eine ungehinderte Pendelbewegung zu erlauben. Die Schweißmanschette bildet im Spaltbereich einen den Spalt umgebenden Raum oder Kanal, der der Schweißelektrode ausreichenden Bewegungsspielraum bietet, gleichzeitig aber auch als Schweißbadsicherung fungieren kann. Damit ermöglicht es die Erfindung, den aus dem Stand der Technik bekannten aufwändigen Prozess deutlich zu vereinfachen. Ein Schienenbruch kann beispielsweise in einem Arbeitsgang fixiert und repariert werden. Dadurch, dass die erfindungsgemäße Schweißmanschette sowohl am Schienensteg, einem Teil des Schienenkopfes und einem Teil des Schienenfußes anliegt, werden die durch den Spalt getrennten Schienen oder Schienenteile sowohl in Schienenlängsrichtung als auch in vertikaler Richtung zentriert. Die Erfindung ist nicht nur für den Fall eines Schienenbruchs, sondern generell zum Verbinden von Schienen oder Schienenteilen mittels Stoßschweißung geeignet.

Unter einer "Schiene" wird hier eine Bahnschiene, beispielsweise eine Rillenschiene, Vignolschiene oder Kranschiene verstanden.

Der Ausdruck "Stoßschweißen" bezieht sich auf die Verbindung von Stoßseiten, d.h. aneinanderstoßenden Stirnseiten, von Schienen mittels Schweißen.

Der Begriff "Spaltbereich" bezeichnet einen sich in Längsrichtung einer Schiene erstreckenden Schienenbereich, der einen Spalt (gegebenenfalls auch als "Stoßlücke" bezeichnet) umfasst. Eine Formulierung wie "im Spaltbereich" in Bezug auf die Schweißmanschette oder eine der die Schweißmanschetten bildenden Laschen bezieht sich auf den Bereich der Schweißmanschette oder der Laschen in Höhe des Spaltbereichs. Der "Spaltbereich" umfasst dabei mindestens den Spalt selbst, vorzugsweise jedoch auch beidseitig des Spaltes angrenzende Schienenbereiche.

Unter dem Begriff "Lasche" wird hier ein allgemein plattenförmiges Bauteil, vorzugsweise aus Metall, verstanden, dessen Form an die Kontur zumindest eines Teils der Längsseite einer Schiene angepasst ist. Sofern hier die Begriffe "Bruchlasche" oder "Schweißlasche" verwendet werden, werden diese synonym zu dem Begriff verwendet.

Wenn hier von einem "elastomeren Material" gesprochen wird, ist hier ein elastisch verformbares Material, bevorzugt ein Material aus einem quervernetzten Elastomer gemeint. Unter einem "quervernetzten Elastomer" werden Elastomere verstanden, deren Molekülketten im Gegensatz zu thermoplastischen Elastomeren untereinander kovalent vernetzt sind. "Elastomere" sind alle Werkstoffe, die gummielastische Eigenschaften aufweisen, also formfeste, aber elastisch verformbare Kunststoffe, deren Glasübergangspunkt sich unterhalb der Raumtemperatur befindet. Beispiele für quervernetzte Elastomere sind Styrol-Butadien-Kautschuk (SBR), Acrylnitril-Butadien-Kautschuk (NBR) und Ethylen-Propylen-Kautschuk (EPM, EPDM).

Die erste Lasche und die zweite Lasche liegen außerhalb des Spaltbereichs mindestens im Bereich des Schienensteges, eines Teils des Schienenkopfes, beispielsweise entlang der Schienenkopfunterseite oder eines Teils davon, und eines Teils des Schienenfußes an der Schiene an. Im Spaltbereich sind die erste Lasche und die zweite Lasche mindestens von dem Schienensteg und dem Teil des Schienenkopfes beabstandet, so dass im Spaltbereich zu beiden Längsseiten der Schiene zumindest im Bereich des Schienensteges und des Teils des Schienenkopfes ein den Spalt umgebender von den Laschen begrenzter Hohlraum oder Kanal gebildet ist. Bevorzugt liegen die erste Lasche und die zweite Lasche an dem Schienensteg, mindestens einem Teil des Schienenkopfes, z.B. der Schienenkopfunterseite oder einem Teil davon, und einem Teil des Schienenfußes an, während sie im Spaltbereich vom Schienensteg, dem Teil des Schienenkopfes und dem Teil des Schienenfußes beabstandet sind, so dass der Spalt entlang des Schienenstegs, des Teils des Schienenkopfes und auch entlang eines Teils des Schienenfußes von dem Hohlraum oder Kanal flankiert ist.

Bei der Schiene kann es sich um Vignolschiene oder eine Rillenschiene handeln. Die Laschen der Schweißmanschette sind dabei jeweils an die Kontur der Schienenlängsseite, insbesondere die Kontur der Schienenkammer, angepasst, an der sie angeordnet sind. Im Falle einer Vignolschiene sind die erste und zweite Lasche daher beispielsweise allgemein u-förmig ausgebildet. Im Falle einer Rillenschiene ist die erste Lasche an die rillenseitige Kontur der Schiene und die zweite Lasche an die fahrkopfseitige Kontur der Schiene angepasst. Die fahrkopfseitige Lasche kann dabei beispielsweise allgemein u-förmig ausgebildet sein, wobei ein Schenkel vorzugsweise so gekrümmt ist, dass er an der Unterseite der Fahrkopfes anliegt, während die rillenseitige Lasche ebenfalls allgemein u-förmig ausgebildet sein kann, wobei allerdings bevorzugt ein Schenkel so gekrümmt ist, dass er an der Unterseite der Leitschiene anliegt.

In einer bevorzugten Ausführungsform der erfindungsgemäßen Anordnung weisen die erste und zweite Lasche im Spaltbereich jeweils eine Ausnehmung in ihrer zur Schiene gerichteten Fläche auf. Damit ist auf einfache Weise die Beabstandung zur Schiene im Spaltbereich realisiert. Die Ausnehmung ist vorzugsweise insbesondere hinsichtlich ihrer Tiefe so dimensioniert, dass eine Schweißelektrode innerhalb des Spaltes insbesondere im Bereich des Schienensteges und des Schienenkopfteils zwischen den Stoßseiten der Schiene so hin- und herbewegt werden kann, dass eine Schweißung möglich ist, gleichzeitig aber auch die Funktion einer Schweißbadsicherung gegeben ist.

Die Laschen können jeweils einstückig oder auch mehrstückig ausgebildet sein. Beispielsweise kann eine Lasche dreistückig ausgebildet sein, z.B. aus einer größeren und zwei kleineren Platten bestehen, wobei die kleineren Platten so ausgestaltet und dimensioniert sind, dass sie mit einer Fläche an die Fläche der größeren Platte angelegt werden können, die in der Einbausituation zur Schiene weist, sich jedoch in Längsrichtung der Lasche über weniger als die Hälfte der größeren Platte erstrecken, so dass die kleineren Platten beim Anlegen an den jeweiligen äußeren Enden der größeren Platte nicht aneinander stoßen und zwischen den einander zugewandten Stirnseiten der kleineren Platten ein Spalt verbleibt, der bei Anordnung an der Schiene im Spaltbereich zu liegen kommt und die Ausnehmung bildet.

Die Schweißmanschette ist vorzugsweise mittels einer Schraubverbindung oder mittels einer Schweißverbindung fest mit der Schiene verbunden. Die Schweißmanschette verbleibt nach dem Stoßschweißen des Spaltes an der Schiene, und wird deshalb hier gegebenenfalls auch als "verlorene Schweißmanschette" bezeichnet.

Insbesondere für den Fall einer streustromisolierten Schiene, beispielsweise einer als Rillenschiene ausgebildeten Schiene, die mittels entsprechender Profile aus elastomerem Material gegenüber Streustrom isoliert ist, umfasst die erfindungsgemäße Anordnung ein unterhalb des Schienenfußes angeordnetes und den Schienenfuß zumindest teilweise seitlich umgreifendes Dämpfungsprofil aus elastomerem Material. Das erfindungsgemäß vorgesehene Fußprofil ist vorzugsweise so angepasst, dass es den Schienenfuß mindestens bis zur Schweißmanschette umgreift, so dass der Schienenfuß der Schiene in dem die Schweißmanschette aufweisenden Bereich elektrisch isoliert ist. Das Fußprofil kann nach dem Schweißen angeordnet werden.

In einer besonders bevorzugt Ausführungsform umfasst die erfindungsgemäße Anordnung darüber hinaus eine die Schweißmanschette abdeckende Abdeckung, die vorzugsweise aus einem elektrisch nicht leitenden Material gefertigt ist. Bei der Abdeckung kann es sich um eine an die äußere Form der Schweißmanschette angepasste Abdeckung aus Kunststoff oder einem elastomeren Material handeln. Die Abdeckung kann dazu dienen, die Schweißmanschette aus optischen Gründen oder zum Schutz vor Witterungseinflüssen abzudecken.

Bevorzugt dient die Abdeckung jedoch im Falle einer streustromisolierten Schiene dazu, die Isolierung wiederherzustellen. Streustromisolierte Schienen weisen häufig nicht nur ein Fußprofil, wie es oben bereits beschrieben wurde, sondern auch Seitenprofile aus elastomerem Material auf, die u.a. zur elektrischen Isolierung der Schiene dienen. Die Seitenprofile sind in dem von der Schweißmanschette bedeckten Schienenbereich entfernt, jedoch außerhalb dieses Bereichs, d.h. in Längsrichtung der Schiene beidseitig von dem von der Schweißmanschette bedeckten Schienenbereich, vorhanden und grenzen an die jeweiligen Enden der Schweißmanschette an. Gegebenenfalls können spezielle Seitenprofile vorgesehen sein, die so ausgestaltet sind, dass sie vorteilhaft einerseits an die Schweißmanschette, andererseits an die Seitenprofile des folgenden Gleisabschnitts angeschlossen werden können. In einer bevorzugten Ausführungsform der erfindungsgemäßen Anordnung erstreckt sich die Abdeckung daher in Längsrichtung der Schiene beidseitig über die Schweißmanschette hinaus und deckt die an die Schweißmanschette jeweils angrenzenden Bereiche der Seitenprofile mit ab. Dadurch ist beispielsweise das Eindringen von Wasser verhindert oder zumindest erschwert. Besonders bevorzugt überlappt die Abdeckung nicht nur die an die Schweißmanschette angrenzenden Bereiche der Seitenprofile, sondern auch die an die Schweißmanschette angrenzenden Bereiche des Fußprofils mit ab. In den Überlappungsbereichen kann eine vollflächige Verklebung der Abdeckung mit den benachbarten Schienenbereichen vorgesehen sein. Kantenbereiche der Abdeckung können darüber hinaus mit Fugenmasse abgedichtet werden, um eine sichere Isolierung der Bruchstelle zu bewirken und eine durchgehende Isolierung der Schiene wiederherzustellen. Bevorzugt ist die Abdeckung aus einem elastomeren Material gefertigt, besonders bevorzugt dem elastomeren Material, aus dem auch die Seitenprofile gefertigt sind.

In einem weiteren Aspekt betrifft die vorliegende Erfindung auch eine Schweißmanschette zum Stoßschweißen eines Spaltes in einer Schiene, wobei die Schiene einen Schienenkopf, einen Schienensteg und einen Schienenfuß sowie einen Spaltbereich mit einem vom Schienenkopf zum Schienenfuß verlaufenden durch Schweißen zu verschließenden Spalt aufweist, umfassend eine erste Lasche und eine zweite Lasche, die so geformt und ausgestaltet sind, dass die erste Lasche an eine erste Längsseite und die zweite Lasche an eine zweite Längsseite der den Spaltbereich umfassenden Schiene so anlegbar ist, dass die Laschen im angelegten Zustand jeweils beidseitig des Spaltbereichs mindestens an dem Schienensteg, einem Teil des Schienenkopfes und einem Teil des Schienenfußes anliegen, und jeweils im Spaltbereich von dem Schienensteg und dem Teil des Schienenkopfes beabstandet sind, so dass im angelegten Zustand im Spaltbereich zu beiden Längsseiten der Schiene zumindest im Bereich des Schienensteges und dem Teil des Schienenkopfes ein den Spalt umgebender von den Laschen begrenzter Hohlraum oder Kanal gebildet wird.

Die erfindungsgemäße Schweißmanschette ist so ausgestaltet, dass sie längsseits einer Schiene fest montiert werden kann, um einen Spalt in der Schiene zu überbrücken und zu verschweißen, wobei die Schweißmanschette beidseitig der Schiene im Spaltbereich mindestens im Bereich des Schienensteges und einem Teil des Schienenkopfes, vorzugsweise der Schienenkopfunterseite oder einem Teil davon, einen entlang des Spaltes verlaufenden Hohlraum oder Kanal ausbildet. Darüber hinaus ist die erfindungsgemäße Schweißmanschette so ausgestaltet, dass sie zwei durch einen Spalt getrennte Schienen oder Schienenteile in Schienenlängsrichtung und in vertikaler Richtung zentriert.

Bevorzugt sind die erste Lasche und die zweite Lasche so geformt, dass sie so an die Schiene anlegbar sind, dass die Laschen im angelegten Zustand jeweils beidseitig des Spaltbereichs mindestens an dem Schienensteg, einem Teil des Schienenkopfes, vorzugsweise der Schienenkopfunterseite oder einem Teil davon, und einem Teil des Schienenfußes anliegen, und jeweils im Spaltbereich von dem Schienensteg, dem Teil des Schienenkopfes und dem Teil des Schienenfußes beabstandet sind, so dass der Hohlraum oder Kanal entlang des Spaltes im Bereich des Schienenstegs, des Teils des Schienenkopfes, bevorzugt der Schienenkopfunterseite, und des Teils des Schienenfußes gebildet wird.

Bevorzugt weist jede der Laschen eine Ausnehmung auf, die so angeordnet ist, dass sie im angelegten Zustand jeweils in dem Spaltbereich zu liegen kommt.

Die Laschen der erfindungsgemäßen Schweißmanschette können einstückig oder mehrstückig ausgebildet sein, wie oben bereits beschrieben. Bevorzugt sind die Laschen mehrstückig ausgebildet.

Die Laschen sind vorzugsweise aus einem geeigneten Metall gefertigt und können Bohrungen zur Durchführung von Schraubverbindungen aufweisen.

In einem weiteren Aspekt betrifft die vorliegende Erfindung auch ein Verfahren zum Stoßschweißen eines Spaltes in einer Schiene, umfassend die folgenden Schritte:
a. Anordnen und Fixieren einer erfindungsgemäßen Schweißmanschette an den Längsseiten der Schiene im Spaltbereich, so dass die Laschen längsseits der Schiene jeweils beidseitig des Spaltbereichs mindestens an dem Schienensteg, einem Teil des Schienenkopfes und einem Teil des Schienenfußes so anliegen, dass im Spaltbereich zu beiden Längsseiten der Schiene mindestens im Bereich des Schienensteges und des Teils des Schienenkopfes ein den Spalt umgebender von den Laschen begrenzter Hohlraum oder Kanal gebildet wird, und
b. Stoßschweißen des Spaltes.

In einer bevorzugten Ausführungsform umfasst das erfindungsgemäße Verfahren die folgenden Schritte:
a. Anordnen und Fixieren einer erfindungsgemäßen Schweißmanschette an den Längsseiten der Schiene im Spaltbereich, so dass die Laschen längsseits der Schiene jeweils beidseitig des Spaltbereichs mindestens an dem Schienensteg, dem Teil des Schienenkopfes und einem Teil des Schienenfußes so anliegen, dass im Spaltbereich zu beiden Längsseiten der Schiene mindestens im Bereich des Schienensteges, dem Teil des Schienenkopfes und dem Teil des Schienenfußes ein den Spalt umgebender von den Laschen begrenzter Hohlraum oder Kanal gebildet wird, und
b. Stoßschweißen des Spaltes.

In einer bevorzugte Ausführungsform des erfindungsgemäßen Verfahrens erfolgt das Stoßschweißen des Spaltes mittels Lichtbogenschweißen.

In einer weiter bevorzugten Ausführungsform umfasst das erfindungsgemäße Verfahren fernder die folgenden Schritte:
c. Anordnen eines Dämpfungsprofils aus elastomerem Material unterhalb des Schienenfußes, wobei das Dämpfungsprofils den Schienenfuß zumindest teilweise, vorzugsweise bis zur Schweißmanschette, umgreift, und
d. Anordnen eines ersten Seitenprofils aus elastomerem Material und eines zweiten Seitenprofils aus elastomerem Material jeweils außerhalb des von der Schweißmanschette abgedeckten Schienenbereichs und an die Schweißmanschette angrenzend an einer ersten Längsseite und einer zweiten Längsseite der Schiene, und
e. Anordnen einer die Schweißmanschette abdeckenden, vorzugsweise elektrisch isolierenden, Abdeckung wobei die Abdeckung sich in Längsrichtung der Schiene beidseitig über die Schweißmanschette hinaus erstreckt und die Seitenprofile in einem an die Schweißmanschette jeweils angrenzenden Überlappungsbereich mit abdeckt.

Bei dem erfindungsgemäßen Verfahren wird eine erfindungsgemäße Schweißmanschette an den Längsseiten der Schiene in dem Bereich mit dem Spalt fest montiert, beispielsweise mittels Schraub- oder Schweißverbindungen. Anschließend kann der Spalt entsprechend verschweißt werden, wobei die Schiene vorzugsweise vorgewärmt wird (z.B. auf >100 °C). Ein Bruch kann gegebenenfalls zu dem zu verschweißenden Spalt erweitert werden. Im Bereich des Kopfes kann der Spalt auch keilförmig (z.B. in einem Winkel von 45 °) nach oben hin erweitert werden. Im Bereich des Schienenfußes kann der Teil des Spaltes, der außerhalb der Schweißmanschette liegt bzw. mit der Elektrode von außerhalb der Schweißmanschette erreicht werden kann, von außen geschweißt werden. Der Schienensteg wird innerhalb der Schweißmanschette verschweißt, wobei die Elektrode durch den von der erfindungsgemäßen Schweißmanschette entlang des Spaltes gebildeten Hohlraum oder Kanal in Querrichtung zur Schiene über genügend Bewegungsspielraum verfügt, um den Steg verschweißen zu können. Die Schweißmanschette dient dabei gleichzeitig als Schweißbadsicherung. Anschließend kann der Schienenkopf verschweißt werden. Bei Rillenschienen kann rillenseitig ein Formstück aus Kupfer eingelegt werden, um die Rille beim Schweißvorgang zu bilden. Die Schweißmanschette bildet zumindest auch im Bereich der Schienenkopfunterseite entlang des Spaltes bzw. diesen flankierend einen Hohlraum oder Kanal, so dass der für den Schienensteg beschriebene Schweißvorgang hier fortgesetzt werden kann. Der Rest des Kopfes wird dann abschließend verschweißt, plangeschliffen und ggfs. profiliert. Die Schweißmanschette verbleibt nach dem Schweißvorgang an der Schiene und kann, insbesondere für den Fall, dass eine elektrische Isolierung erforderlich ist, mit einer Abdeckung, vorzugsweise aus elektrisch nicht leitendem elastomerem Material, abgedeckt werden, die nicht nur die Schweißmanschette, sondern in Längsrichtung der Schiene auch zur Schweißmanschette benachbarte Bereiche der Schiene abdeckt. In den Überlappungsbereichen kann die Abdeckung mit den benachbarten Schienenbereichen verklebt sein. Kantenbereiche der Abdeckung können darüber hinaus mit Fugenmasse abgedichtet werden, um für eine sichere Isolierung der Bruchstelle und eine Wiederherstellung einer durchgehenden Isolierung der Schiene zu sorgen.

Mit Hilfe des erfindungsgemäßen Verfahrens kann zumindest ein großer Teil des Spaltes in der Schiene, besonders im Bereich des Schienenstegs und des Schienenkopfes geschlossen werden. Auch große Teile des Schienenfußes können verschweißt werden. Ein Teil des Schienenfußes, der von der Manschette bedeckt wird, kann zwar nicht verschweißt werden. Das ist jedoch auch nicht erforderlich, da dennoch ein Großteil der statisch wichtigen Schienenteile verschweißt wird und die an der Schiene verbleibende und dort beispielsweise mittels Schraubverbindung oder Schweißverbindung fest montierte Schweißmanschette zusätzlich zur Stabilisierung des Gleises beiträgt.

Auch wenn die erfindungsgemäßen Mittel und Verfahren hier im Wesentlichen für den bevorzugten Fall der Reparatur eines Schienenbruches näher beschrieben und erläutert wurden, sind diese allerdings nicht darauf beschränkt, sondern können auch zur Verbindung von Schienenabschnitten dienen.

Die Erfindung wird im Folgenden anhand der angefügten Zeichnungen rein zu Veranschaulichungszwecken näher erläutert.
Figur 1 bis 5: Räumliche Ansichten einer Ausführungsform einer erfindungsgemäßen Anordnung sowie Teilen davon, mit einer Rillenschiene, beispielsweise vom Typ 105C1, sowie eine Draufsicht auf die Anordnung (Fig. 2).
Figur 6: Räumliche Ansicht einer anderen Ausführungsform einer erfindungsgemäßen Anordnung mit einer Vignolschiene, beispielsweise vom Typ S49.
Figur 7: Querschnitt durch die in Figur 6 dargestellte erfindungsgemäßen Anordnung.
Figur 8 bis 11: Räumliche Ansichten einer weiteren Ausführungsform einer erfindungsgemäßen Anordnung mit einer Rillenschiene, beispielsweise vom Typ Ri60, sowie Teilen davon.
Figur 12: Räumliche Darstellung des Fußprofils der in den Figuren 8 bis 11 gezeigten Ausführungsform einer erfindungsgemäßen Anordnung.
Figur 13: Räumliche Darstellung von Seitenprofilen der in den Figuren 8 bis 11 gezeigten Ausführungsform einer erfindungsgemäßen Anordnung.
Figuren 14 bis 15: Bestandteile einer Schweißmanschette zum Reparaturschweißen von Straßenbahnschienen.
Figur 16: Querschnitt durch eine Rillenschiene mit einer Schweißmanschette aus den in den Figuren 14 bis 15 dargestellten Bestandteilen.

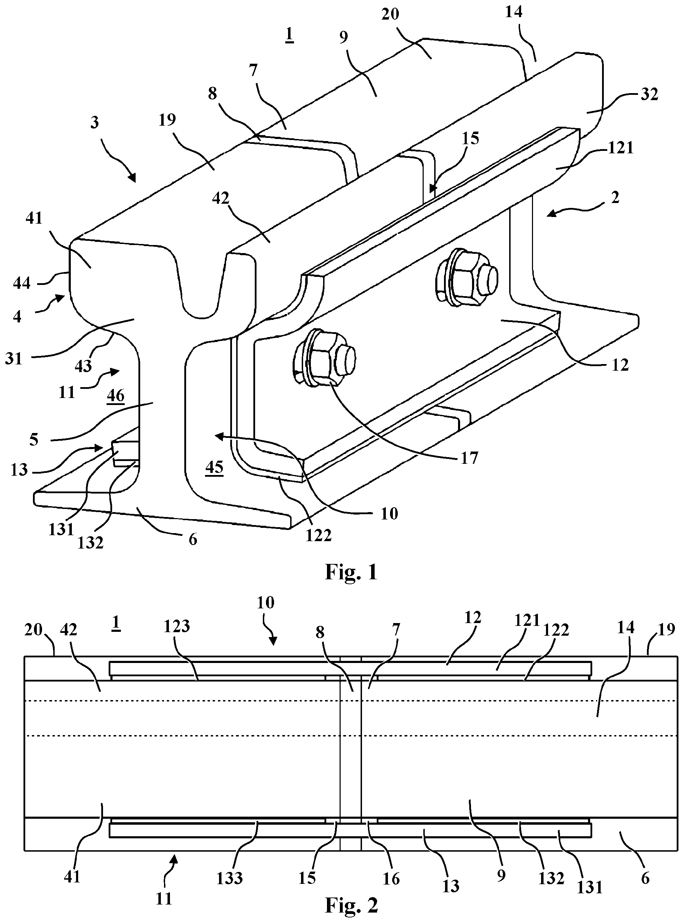

Die Figuren 1 bis 5 zeigen verschiedene Ansichten und Teile einer erfindungsgemäßen Anordnung 1 im Falle einer Rillenschiene.

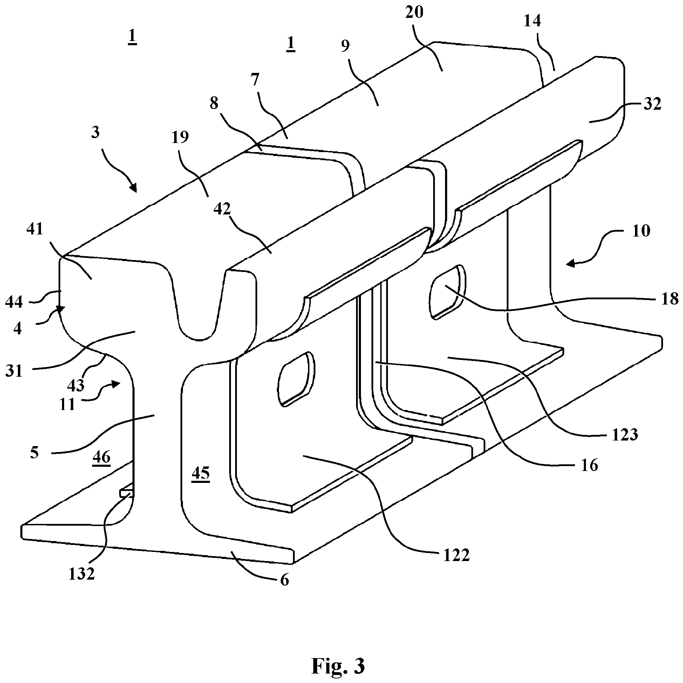

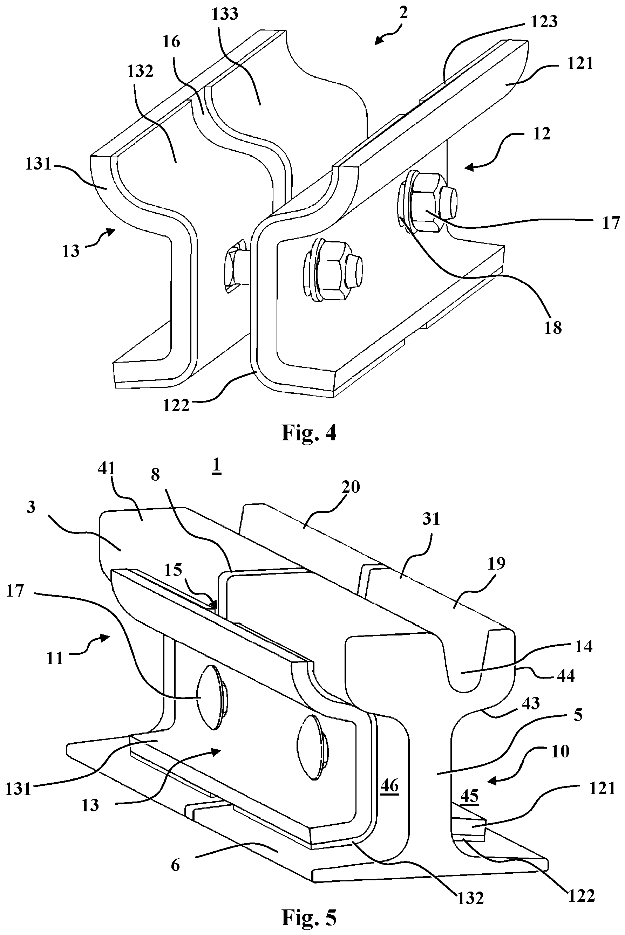

Figur 1 zeigt eine räumliche Ansicht einer Ausführungsform einer erfindungsgemäßen Anordnung 1 bei einer Rillenschiene vom Typ 105C1. Die Schiene 3 weist einen Schienenkopf 4, einen Schienensteg 5 und einen Schienenfuß 6 auf, und ist hier eine Rillenschiene (Typ 105C1) mit einer einen Fahrkopf 41 umfassenden Fahrschiene 31 und einer einen Leitschienenkopf 42 umfassenden Leitschiene 32. Die Schiene 3 weist in einem Spaltbereich 7 einen Spalt 8 auf, der durch einen Bruch entstanden sein kann und zur Vorbereitung der Verschweißung der Stoßseiten der durch den Bruch entstandenen Schienenteile erweitert, begradigt und gesäubert wurde. Der Bruch kann beispielsweise auf einen Spalt 8 mit einer Spaltweite von 18 mm erweitert sein. Der Spalt 8 teilt die Schiene 3 in einen ersten Schienenabschnitt 19 und einen zweiten Schienenabschnitt 20. In einem den Spaltbereich 7 mit dem Spalt 8 umfassenden Schienenbereich 9 ist an den Längsseiten 10, 11 der Schiene 3 eine erfindungsgemäße Schweißmanschette 2 angeordnet. Die Schweißmanschette 2 ist hier mittels Schraubverbindungen 17, die durch Bohrungen 18 (s. auch Fig. 3) geführt sind, an der Schiene 3 befestigt. Die Schweißmanschette 2 umfasst zwei einander gegenüberliegende Laschen 12, 13. Die erste Lasche 12 ist hier rillenseitig an der ersten Längsseite 10 der Schiene 3 in der ersten Schienenkammer 45, die der ersten Lasche 12 gegenüberliegende zweite Lasche 13 fahrkopfseitig an der zweiten Längsseite 11 in der zweiten Schienenkammer 46 der Schiene 3 angeordnet. Die Laschen 12, 13 sind hier allgemein u-förmig im Querschnitt und liegen im Bereich des Schienensteges 5 und einem Teil des Schienenkopfes 4, hier der Schienenkopfunterseite 43 und einem Teil der Schienenkopfflanke 44, sowie an einem Teil der zum Schienenkopf 4 gerichteten Oberfläche des Schienenfußes 5 eng an der Schiene 3 an. Die Laschen 12, 13 sind an die jeweilige Kontur der Schiene 3 angepasst, die erste Lasche 12 an die rillenseitige Kontur der Schiene 3 bzw. an die Kontur der rillenseitigen ersten Schienenkammer 45, die zweite Lasche 13 an die fahrkopfseitige Kontur der Schiene 3 bzw. an die Kontur der fahrkopfseitigen zweiten Schienenkammer 46. Hierzu weisen insbesondere die zum Schienenkopf 4 liegenden Schenkel der Laschen 12, 13 einen entsprechend gebogenen Verlauf auf, damit sie an die Leitschiene 32 und die Fahrschiene 31 angelegt werden können. Die Laschen 12, 13 überbrücken den Spalt 8 und fixieren die Schiene 3 sowohl in Längs- als auch in Querrichtung. Die Laschen 12, 13 sind hier jeweils dreistückig ausgebildet und umfassen jeweils eine erste Laschenplatte 121, 131 sowie eine zweite und dritte Laschenplatte 122, 132; 123, 133, wie besser aus den Figuren 2 und 4 ersichtlich ist (s. auch Figur 3). Die zweite und dritte Laschenplatte 122, 132; 123, 133 sind jeweils kleiner als die erste Laschenplatte 121, 131 ausgebildet und liegen mit einer Fläche an der zur Schiene 3 gewandten Fläche der größeren Laschenplatte 1 an. Die zweite und dritte Laschenplatte 122, 132; 123, 133 erstrecken sich jeweils in Längsrichtung der Lasche 12, 13 über weniger als die Hälfte der größeren Laschenplatte 121, 131, so dass die kleineren Laschenplatten 122, 132; 123, 133 beim Anlegen an den jeweiligen äußeren Enden der größeren Laschenplatte 121, 131 nicht aneinander stoßen, so dass zwischen den einander zugewandten Schmalseiten der kleineren Laschenplatten 122, 132; 123, 133 ein Spalt verbleibt und sich eine Ausnehmung 16 ergibt. Die Ausnehmung 16 umgibt den Spalt 8 und bildet mit den links und rechts von dem Spalt 8 liegenden seitlichen Flächen der Schiene 3 einen zum Spalt 8 hin offenen (in Figur 1 nicht direkt sichtbaren) Hohlraum oder Kanal 15, der bis zum Schienenfuß 5 verläuft. Die Ausnehmung 16 ist vorzugsweise so dimensioniert, dass sie genügend Raum für die Pendelbewegung einer Schweißelektrode bietet. Beispielsweise kann sie so dimensioniert sein, dass der Abstand zwischen der zur Schiene 3 gerichteten Fläche der ersten Laschenplatte 121, 131 und der gegenüberliegenden Fläche der Schiene 3 bzw. dem Beginn des Spaltes 8 mindestens dem Durchmesser einer Schweißelektrode entspricht.

Figur 2 zeigt eine Draufsicht auf die in Figur 1 dargestellte Ausführungsform der erfindungsgemäßen Anordnung 1. Die gestrichelten Linien deuten den Verlauf der Rille 14 an.

Figur 3 zeigt die in den Figuren 1 und 2 dargestellte Ausführungsform der erfindungsgemäßen Anordnung 1. Zur besseren Übersicht sind hier allerdings die erste Laschenplatte 121 und die zweite Laschenplatte 131 sowie die Schraubverbindungen 17 weggelassen, so dass ein besserer Blick insbesondere auf die unter der ersten Laschenplatte 121 liegenden zweiten und dritten Laschenplatten 122, 123 der ersten Lasche 12 ermöglicht wird.

Figur 4 zeigt isoliert die Schweißmanschette 2 gemäß der in Figur 1 dargestellten Ausführungsform der erfindungsgemäßen Anordnung 1.

Figur 5 gibt eine fahrkopfseitige räumliche Ansicht der in Figur 1 dargestellten Ausführungsform der erfindungsgemäßen Anordnung 1 wieder.

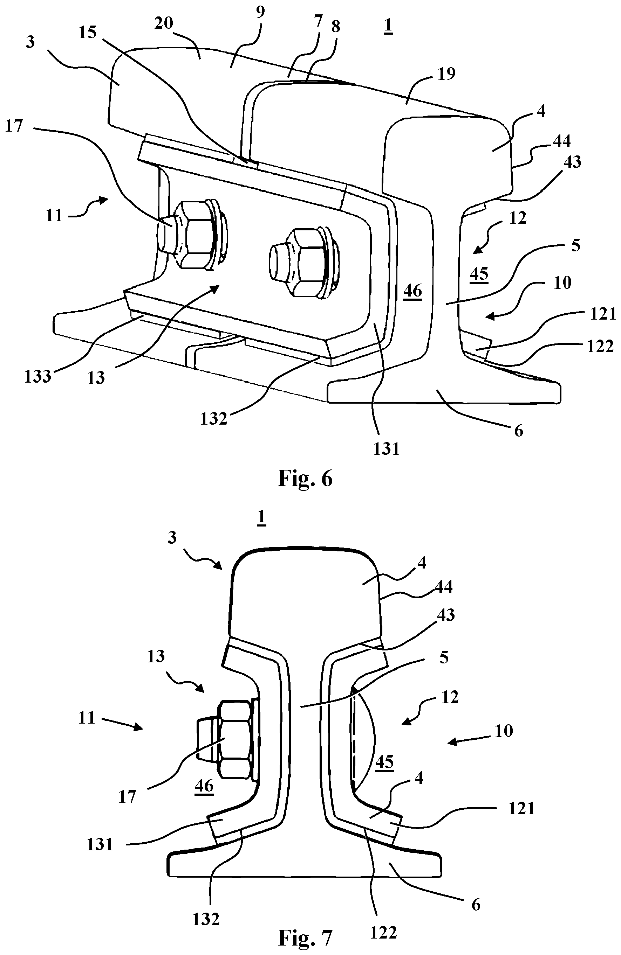

In Figur 6 und Figur 7 ist eine weitere Ausführungsform einer erfindungsgemäßen Anordnung 1 dargestellt, wobei die Schiene 3 hier eine Vignolschiene vom Typ S49 ist. Gleiche Merkmale sind mit gleichen Bezugsziffern gekennzeichnet, so dass auf eine unnötig wiederholte Beschreibung verzichtet wird. Die an den beiden Längsseiten 10, 11 in den Schienenkammern 45, 46 der Schiene 3 mittels Schraubverbindungen 17 fest angebrachten allgemein u-förmig ausgebildeten Laschen 12, 13 sind ebenfalls dreistückig ausgebildet, wobei die Laschen 12, 13 aufgrund der Spiegelsymmetrie der Schiene 3 hier ebenfalls spiegelsymmetrisch zueinander sind. Die Laschen 12, 13 liegen am Schienensteg 5, an einem Teil der oberen Oberfläche des Schienenfußes 6 und an der Schienenkopfunterseite 43 an und entsprechend an die Kontur der Schiene 3 bzw. der Schienenkammern 45, 46 angepasst.

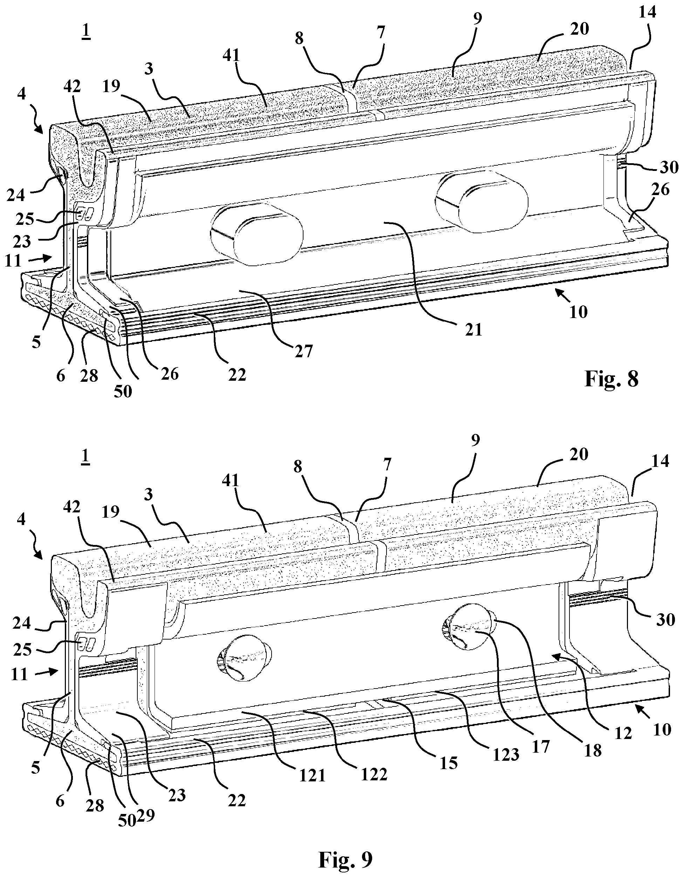

Die Figuren 8 bis 13 zeigen Ansichten einer weiteren Ausführungsform einer erfindungsgemäßen Anordnung 1, sowie Teile davon, hier mit einer Rillenschiene vom Typ Ri60.

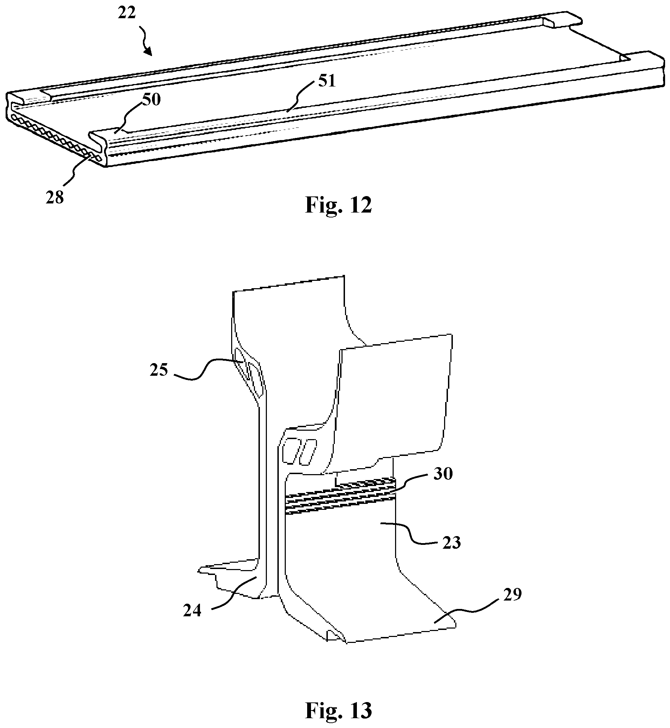

Figur 8 zeigt eine rillenseitige räumliche Ansicht einer weiteren Ausführungsform einer erfindungsgemäßen Anordnung 1 mit einer Straßenbahn-Rillenschiene vom Typ Ri60. Bei der erfindungsgemäßen Anordnung 1 ist die erfindungsgemäße Schweißmanschette 2 durch eine Abdeckung 21, die hier aus elektrisch isolierendem Elastomermaterial wie die weiter unten näher beschriebenen Seitenprofile 23, 24 besteht, abgedeckt, so dass die Schweißmanschette 2 in Figur 8 nicht sichtbar ist (s. aber Figur 9, in der die Anordnung 1 mit entfernter Abdeckung dargestellt ist). An den Längsseiten 10, 11 der Schiene 3 sind hier außerhalb des von der Schweißmanschette 2 bedeckten Bereichs streifenförmige Seitenprofile 23, 24 aus elastomerem Material angeordnet, die zur Schalldämpfung und zur elektrischen Isolierung dienen (s. auch Fig. 13). Die Seitenprofile 23, 24 liegen in den Schienenkammern 45, 46 jeweils an dem Schienenkopf 4 im Bereich der Schienenkopfunterseite 43 und der Schienenkopfflanke 44, dem Schienensteg 5 und einem Teil der Oberseite des Schienenfußes 6 an. Die Seitenprofile 23, 24 sind im Bereich der Schienenkopfunterseite 43 im Querschnitt verstärkt und weisen hier parallel zur Schiene 3 verlaufende Längskanäle 25 auf. Im Bereich des Schienensteges 5 sind die Seitenprofile 23, 24 mit Riefen 30 versehen. Darüber hinaus ist in dem Bereich der Schiene 3 mit der Schweißmanschette 2 unter dem Schienenfuß 6 ein im Querschnitt allgemein u-förmiges Fußprofil 22 aus elastomerem Material angeordnet (s. auch Fig. 12), das den Schienenfuß 6 jeweils seitlich umgreift und einen Teil der nach oben, d.h. zum Schienenkopf, gerichteten Oberfläche des Schienenfußes 6 bedeckt. Das Fußprofil 22 erstreckt sich in Längsrichtung der Schiene 3 beidseitig über die Schweißmanschette 2 hinaus und weist hier an seinen vier Ecken Fußprofilzungen 50 auf, die sich in Richtung Schiene 3 erstrecken. Auf diese Fußprofilzungen 50 kommen Seitenprofillippen 29 der Seitenprofile 23, 24 zu liegen, so dass hier im Wesentlichen die gesamte Oberfläche der Schiene 3 mit Ausnahme der befahrenen Schienenkopfoberfläche von den Seitenprofilen 23, 24 und dem Fußprofil 22 umgeben ist. Das Fußprofil 22 weist in dem Bereich unterhalb des Schienenfußes 6 Längskanäle 28 auf. Die Abdeckung 21 bedeckt die Schweißmanschette 2 vollständig und ist an die äußere Kontur der Schweißmanschette 2, einschließlich der Schraubverbindungen 17, angepasst. Die Abdeckung 21 erstreckt sich jedoch in sämtliche Richtungen über die Schweißmanschette 2 hinaus und deckt auch benachbarte Bereiche mit ab. Die Abdeckung 21 liegt daher auch an dem Schienenkopf 4 an und bedeckt einen Teil des den Schienenfuß 6 umgreifenden Bereiches des Fußprofils 22 sowie in einem Überlappungsbereich 26 auch einen Teil der links und rechts von der Schweißmanschette 2 angeordneten Seitenprofile 23, 24.

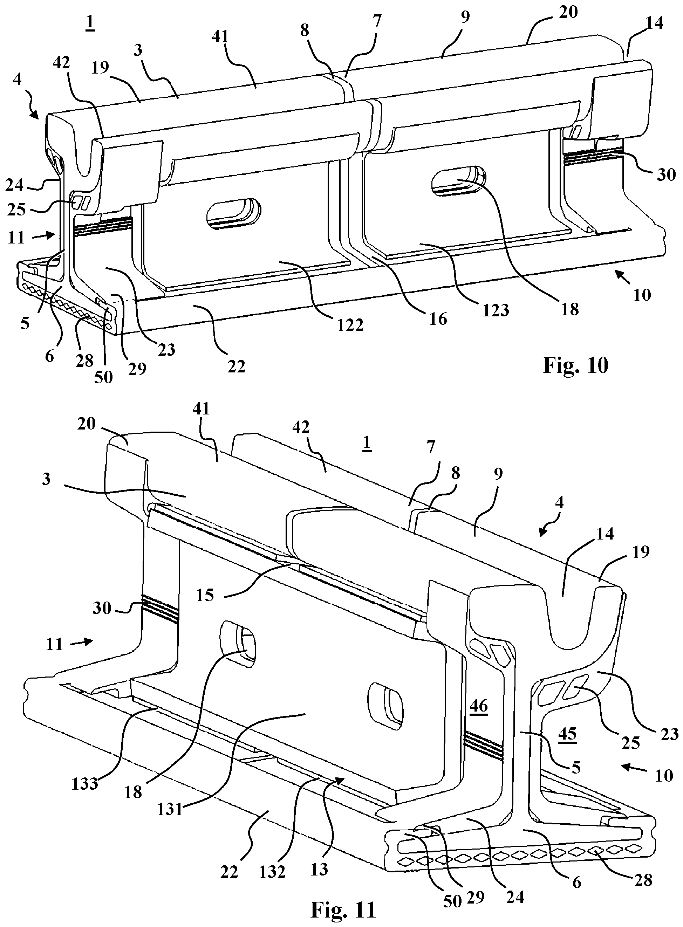

Figur 9 zeigt die in Figur 8 dargestellte Ausführungsform einer erfindungsgemäßen Anordnung 1 ohne die Abdeckung 21. In Figur 10 ist darüber hinaus die erste Laschenplatte 121 der ersten Lasche 12 der Schweißmanschette 2 weggelassen. Aus den Figuren 9 und 10 ist insbesondere die Ausgestaltung der Seitenprofile 23, 24 besser ersichtlich.

Figur 11 zeigt eine fahrkopfseitige räumliche Darstellung der in Figur 8 dargestellten Ausführungsform einer erfindungsgemäßen Anordnung 1. Auch hier ist zur besseren Übersicht die Abdeckung 21 entfernt. Schraubverbindungen 17 zur Befestigung der Schweißmanschette 2 sind ebenfalls nicht dargestellt.

Figur 12 zeigt isoliert ein Fußprofil 22, wie es in den Figuren 8 bis 11 dargestellt ist und im Bereich der erfindungsgemäßen Anordnung 1 unter dem Schienenfuß 6 der Schiene 3 nach Verschweißen des Spaltes 8 angeordnet werden kann. Das Fußprofil 22 ist allgemein u-förmig im Querschnitt, wobei die Schenkel sich nach innen erstrecken und jeweils eine Fußprofillippe 51 bilden, die in der Einbausituation den Schienenfuß 6 seitlich umgreift und auf der oberen Oberfläche des Schienenfußes 6 zu liegen kommt. An den äußern Enden weist die Fußprofillippe 51 sich noch weiter nach innen erstreckende Fußprofilzungen 50 auf. Auf diese Fußprofilzungen 50 kommen in der Einbausituation Lippen 29 entsprechend ausgestalteter Seitenprofile 23, 24 (s. Figur 13) zu liegen.

Figur 13 zeigt isoliert zwei der in den Figuren 8 bis 11 in Einbausituation dargestellten Seitenprofile 23, 24. Die Seitenprofile 23, 24 wurden oben bereits in Zusammenhang mit den Figuren 8 bis 11 im Detail beschrieben, so dass hier auf eine erneute Beschreibung verzichtet wird.

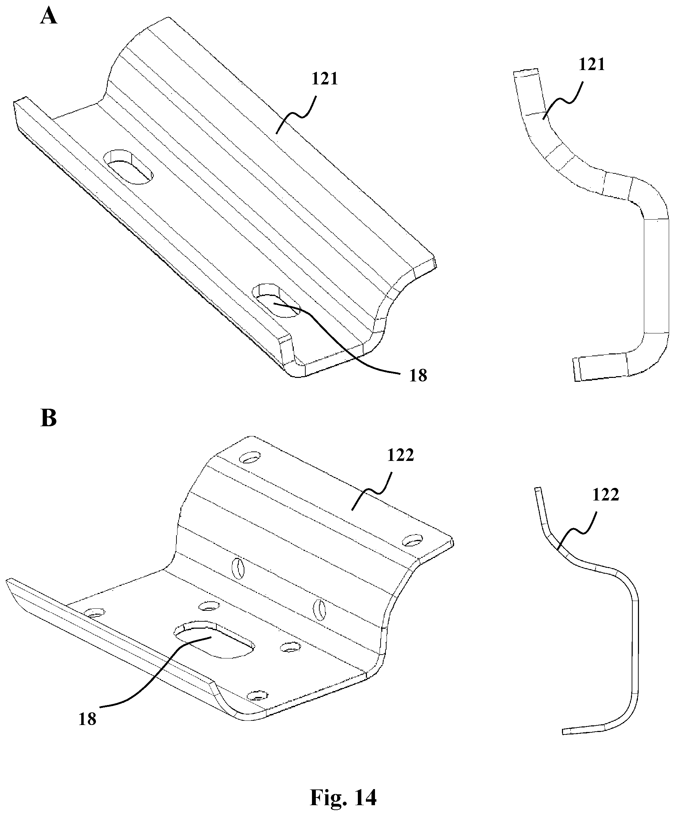

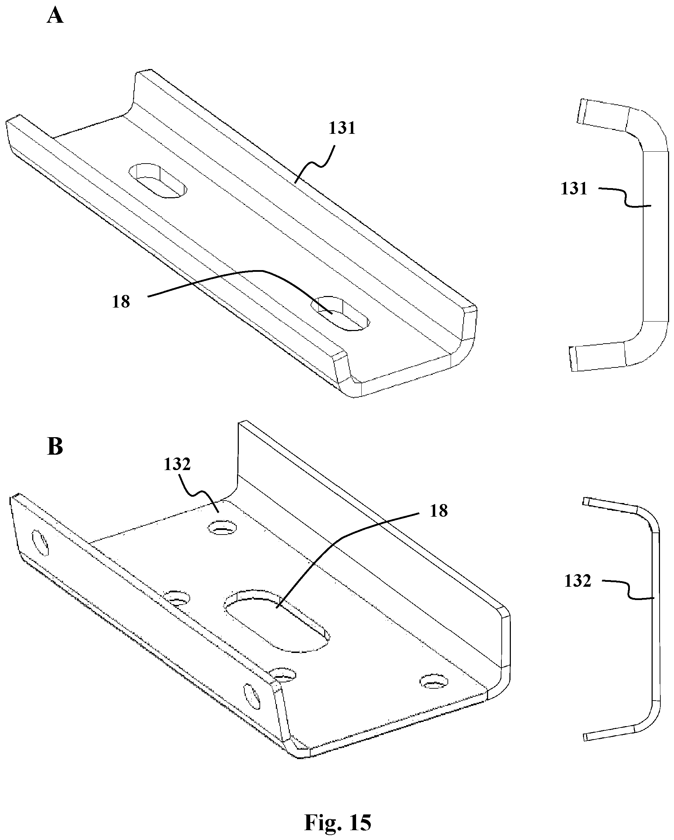

Die Figuren 14 und 15 zeigen Bestandteile einer erfindungsgemäßen Schweißmanschette 2, wie sie beispielsweise zum Reparaturschweißen einer Straßenbahn-Rillenschiene einsetzbar ist. Die Bestandteile können auch Teile eines Bausatzes zum Reparaturschweißen von Rillenschienen bilden.

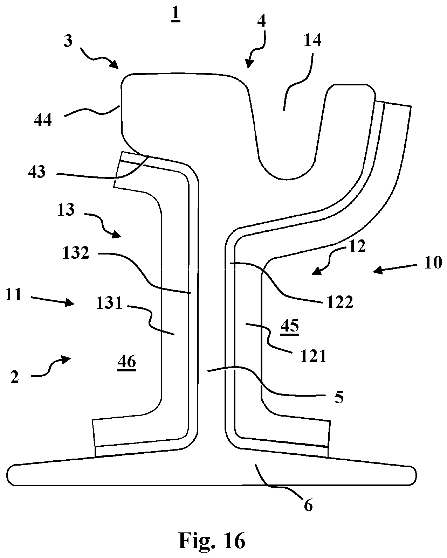

Figur 14 zeigt eine erste Laschenplatte 121 (A) sowie eine zweite Laschenplatte 122 (B) einer ersten, hier rillenseitig an einer Rillenschiene 3 anzuordnenden ersten Lasche 12 einer Schweißmanschette 2. Eine dritte Laschenplatte 123 ist hier nicht dargestellt, da sie zu der zweiten Laschenplatte 122 identisch ist. Querschnitte durch die Laschenplatten 121, 122 sind jeweils rechts dargestellt. Die Laschenplatten 121 122 sind nicht maßstäblich zueinander dargestellt. Insbesondere ist die zweite Laschenplatte 122 im Verhältnis zur ersten Laschenplatte 121 zu groß dargestellt. Vielmehr muss man sich die zweite Laschenplatte 122 so verkleinert vorstellen, dass die Bohrungen 18 die gleiche Größe aufweisen, so dass diese aufeinander passen. Die Laschenplatten 121 122 sind so dimensioniert und geformt, dass sie ineinandergelegt im Bereich der rillenseitigen ersten Schienenkammer 45 an die äußere Kontur einer Rillenschiene (hier rillenseitig) angelegt werden können (s. auch Fig. 16). Die erste Laschenplatte 121 weist eine größere Plattenstärke auf als die zweite Laschenplatte 122. Die zweite Laschenplatte 122 ist weniger als halb so lang wie die erste Laschenplatte 121, so dass sie, wenn sie in die erste Laschenplatte 121 so eingesetzt wird, dass sie mit ihrer Bohrung 18 auf einer der entsprechenden Bohrungen 18 der erste Laschenplatte 121 angeordnet wird, sich nicht bis zur Mitte der ersten Laschenplatte 121 erstreckt, so dass sich zusammen mit einer dritten Laschenplatte 123, die mit ihrer Bohrung 18 auf der zweiten Bohrung 18 der ersten Laschenplatte 121 angeordnet wird, zwischen der zweiten und dritten Laschenplatte 122, 123 ein Spalt ergibt, wodurch zusammen mit der dazwischen liegenden Fläche der ersten Laschenplatte 121 in der Mitte der ersten Lasche 12 eine Ausnehmung 16 gebildet ist.

Figur 15 zeigt eine erste Laschenplatte 131 (A) sowie eine zweite Laschenplatte 132 (B) einer zweiten, hier fahrkopfseitig an einer Rillenschiene 3 anzuordnenden zweiten Lasche 13 einer Schweißmanschette 2. Die dritte Laschenplatte 133 als weiterer Bestandteil einer zweiten Lasche 13 ist hier erneut nicht dargestellt, da sie zu der zweiten Laschenplatte 132 identisch ausgebildet ist. Querschnitte durch die Laschenplatten 131, 132 sind jeweils rechts dargestellt. Auch hier weist die erste Laschenplatte 131 eine größere Plattenstärke auf als die zweite Laschenplatte 132. Was zu Figur 14 hinsichtlich der Dimensionen der Laschenplatten 121, 122 gesagt wurde, gilt hier entsprechend für die hier dargestellten Laschenplatten 131, 132. Auch für den Zusammenbau einer ersten Laschenplatte 131 mit einer zweiten Laschenplatte 132 und einer dritten Laschenplatte 133 zu einer zweiten Lasche 13 gilt entsprechendes.

Ein Bausatz zum Reparaturschweißen einer Schiene 3 kann beispielsweise jeweils die erste, zweite und dritte Laschenplatte 121, 122, 123 einer ersten Lasche 12 und die erste, zweite und dritte Laschenplatte 131, 132, 133 einer zweiten Lasche 13 umfassen, gegebenenfalls zusammen mit geeigneten Schraubverbindungen 17.

Figur 16 zeigt einen Querschnitt durch eine Rillenschiene außerhalb eines Spaltes 8, mit einer erfindungsgemäßen Schweißmanschette 2, zusammengesetzt aus den in den Figuren 14 und 15 dargestellten Bestandteilen.

## Patentansprüche

1. Anordnung (1), umfassend
a) eine Schiene (3) mit einem Schienenkopf (4), einem Schienensteg (5) und einem Schienenfuß (6), wobei die Schiene (3) in einem Spaltbereich (7) einen vom Schienenkopf (4) zum Schienenfuß (6) verlaufenden durch Schweißen zu verschließenden oder verschlossenen Spalt (8) aufweist, und
b) eine Schweißmanschette (2), die die Schiene (3) an deren beiden Längsseiten (10, 11) in einem den Spaltbereich (7) umfassenden Schienenbereich (9) in Längsrichtung flankiert, den Spalt (8) überbrückt und in Bezug auf die Längsrichtung der Schiene (3) beidseitig des Spaltes (8) mit der Schiene (3) fest verbunden ist, wobei die Schweißmanschette (2) eine die Schiene (3) an deren erster Längsseite (10) in Längsrichtung flankierende erste Lasche (12) und eine die Schiene (3) an deren zweiter Längsseite (11) in Längsrichtung flankierende zweite Lasche (13) umfasst, und wobei die erste Lasche (12) und die zweite Lasche (13) jeweils außerhalb des Spaltbereichs (7) mindestens an dem Schienensteg (5), einem Teil des Schienenkopfes (4) und einem Teil des Schienenfußes (6) anliegen, und jeweils im Spaltbereich (7) von dem Schienensteg (5) und dem Teil des Schienenkopfes (4) beabstandet sind, so dass im Spaltbereich (7) zu beiden Längsseiten (10, 11) der Schiene (3) mindestens im Bereich des Schienensteges (5) und des Teils des Schienenkopfes (4) ein den Spalt (8) umgebender von den Laschen (12, 13) begrenzter Hohlraum oder Kanal (15) gebildet ist.

2. Anordnung (1) nach Anspruch 1, wobei die erste Lasche (12) und die zweite Lasche (13) an dem Schienensteg (5), mindestens einem Teil der Unterseite (43) des Schienenkopfes (4) und einem Teil des Schienenfußes (6) anliegen, und jeweils im Spaltbereich (7) von dem Schienensteg (5), dem Teil der Unterseite (43) des Schienenkopfes (4) und dem Teil des Schienenfußes (6) beabstandet sind, so dass im Spaltbereich (7) zu beiden Längsseiten (10, 11) der Schiene (3) mindestens im Bereich des Schienensteges (5), des Teils des Schienenkopfes (4) und des Teils des Schienenfußes (6) ein den Spalt (8) umgebender von den Laschen (12, 13) begrenzter Hohlraum oder Kanal (15) gebildet ist.

3. Anordnung (1) nach einem der Ansprüche 1 oder 2, wobei die Schiene (3)
a. eine Vignolschiene ist und die erste und zweite Lasche (12, 13) spiegelsymmetrisch zueinander ausgebildet sind, oder
b. eine Rillenschiene ist, wobei der Schienenkopf (4) eine Fahrschiene (31) mit einem Fahrschienenkopf (41) und eine Leitschiene (32) mit einem Leitschienenkopf (42) sowie eine zwischen Fahrschiene (31) und Leitschiene (32) gebildete Rille (14) umfasst, und wobei die erste Lasche (12) an die rillenseitige Kontur der Schiene (3) angepasst ist und die zweite Lasche (13) an die fahrkopfseitige Kontur der Schiene (3) angepasst ist.

4. Anordnung (1) nach einem der vorhergehenden Ansprüche, wobei die erste und zweite Lasche (12, 13) im Spaltbereich (7) jeweils eine Ausnehmung (16) in ihrer zur Schiene gerichteten Fläche aufweisen.

5. Anordnung (1) nach einem der vorhergehenden Ansprüche, wobei die Laschen (12, 13) jeweils einstückig oder mehrstückig, vorzugsweise mehrstückig, ausgebildet sind.

6. Anordnung (1) nach einem der vorhergehenden Ansprüche, wobei die Schweißmanschette (2) mittels Schraubverbindung (17) oder mittels Schweißverbindung fest mit der Schiene (3) verbunden ist.

7. Anordnung (1) nach einem der vorhergehenden Ansprüche, ferner umfassend ein unterhalb des Schienenfußes (6) angeordnetes und den Schienenfuß (6) zumindest teilweise, bevorzugt mindestens bis zur Schweißmanschette (2) umgreifendes Dämpfungsprofil (22) aus elastomerem Material.

8. Anordnung (1) nach einem der vorhergehenden Ansprüche, ferner umfassend eine die Schweißmanschette (2) abdeckende Abdeckung (21).

9. Anordnung (1) nach Anspruch 8, wobei die Schiene (3) außerhalb des von der Schweißmanschette (2) abgedeckten Schienenbereichs und an die Schweißmanschette (2) angrenzend an ihrer ersten Längsseite (10) ein erstes Seitenprofil (23) aus elastomerem Material und an seiner zweiten Längsseite (11) ein zweites Seitenprofil (24) aus elastomerem Material aufweist, und wobei die Abdeckung (21) sich in Längsrichtung der Schiene (3) beidseitig über die Schweißmanschette (2) hinaus erstreckt und die Seitenprofile (23, 24) in einem an die Schweißmanschette (2) jeweils angrenzenden Überlappungsbereich (26) mit abdeckt.

10. Schweißmanschette (2) zum Stoßschweißen eines Spaltes (8) in einer Schiene (3), wobei die Schiene einen Schienenkopf (4), einen Schienensteg (5) und einen Schienenfuß (6) sowie einen Spaltbereich (7) mit einem vom Schienenkopf (4) zum Schienenfuß (6) verlaufenden durch Schweißen zu verschließenden Spalt (8) aufweist, umfassend eine erste Lasche (12) und eine zweite Lasche (13), die so geformt und ausgestaltet sind, dass die erste Lasche (12) an eine erste Längsseite (10) und die zweite Lasche (13) an eine zweite Längsseite (11) der den Spaltbereich (7) umfassenden Schiene (3) so anlegbar ist, dass die Laschen (12, 13) im angelegten Zustand jeweils beidseitig des Spaltbereichs (7) mindestens an dem Schienensteg (3), einem Teil des Schienenkopfes (4) und einem Teil des Schienenfußes (6) anliegen, und jeweils im Spaltbereich (7) von dem Schienensteg (5) und dem Teil des Schienenkopfes (4) beabstandet sind, so dass im angelegten Zustand im Spaltbereich (7) zu beiden Längsseiten (10, 11) der Schiene zumindest im Bereich des Schienensteges (5) und dem Teil des Schienenkopfes (4) ein den Spalt (8) umgebender von den Laschen (12, 13) begrenzter Hohlraum oder Kanal (15) gebildet wird.

11. Schweißmanschette (2) nach Anspruch 10, wobei die erste Lasche (12) und die zweite Lasche (13) so an die Schiene (3) anlegbar sind, dass die Laschen (12, 13) im angelegten Zustand jeweils beidseitig des Spaltbereichs (7) mindestens an dem Schienensteg (5), einem Teil des Schienenkopfes (4) und einem Teil des Schienenfußes (6) anliegen, und jeweils im Spaltbereich (7) von dem Schienensteg (5), dem Teil des Schienenkopfes (4) und dem Teil des Schienenfußes (6) beabstandet sind, so dass der Hohlraum oder Kanal (15) entlang des Spaltes (8) im Bereich des Schienenstegs (5), des Teils des Schienenkopfes (4) und des Teils des Schienenfußes gebildet wird.

12. Schweißmanschette nach Anspruch 10 oder 11, wobei jede der Laschen (12, 13) eine Ausnehmung (16) aufweist, die so angeordnet ist, dass sie im angelegten Zustand der Schweißmanschette (2) jeweils in dem Spaltbereich (7) zu liegen kommt, um dort den Hohlraum oder Kanal (15) zu bilden.

13. Schweißmanschette nach Anspruch 10 oder 12, wobei die Laschen (12, 13) einstückig oder mehrstückig, vorzugsweise mehrstückig, ausgebildet sind.

14. Verfahren zum Stoßschweißen eines Spaltes (8) in einer Schiene (3), umfassend die folgenden Schritte:
a. Anordnen und Fixieren einer Schweißmanschette (2) nach einem der Ansprüche 10 bis 13 an den Längsseiten (10, 11 einer Schiene (3), wobei die Schiene (3) in einem Spaltbereich (7) einen vom Schienenkopf (4) zum Schienenfuß (6) verlaufenden durch Schweißen zu verschließenden oder verschlossenen Spalt (8) aufweist, so dass die Laschen (12, 13) längsseits der Schiene (3) jeweils beidseitig des Spaltbereichs (7) mindestens an dem Schienensteg (5), einem Teil des Schienenkopfes (4) und einem Teil des Schienenfußes (6) so anliegen, dass im Spaltbereich (7) zu beiden Längsseiten (10, 11) der Schiene (3) mindestens im Bereich des Schienensteges (5) und des Teils des Schienenkopfes (4) ein den Spalt (8) umgebender von den Laschen (12, 13) begrenzter Hohlraum oder Kanal (15) gebildet wird, und
b. Stoßschweißen des Spaltes (8).

15. Verfahren nach Anspruch 14, umfassend die folgenden Schritte:
a. Anordnen und Fixieren einer Schweißmanschette (2) nach einem der Ansprüche 10 bis 13 an den Längsseiten (10, 11) der Schiene (3) im Spaltbereich (7), so dass die Laschen (12, 13) längsseits der Schiene (3) jeweils beidseitig des Spaltbereichs (7) mindestens an dem Schienensteg (5), dem Teil des Schienenkopfes (4) und einem Teil des Schienenfußes (6) so anliegen, dass im Spaltbereich (7) zu beiden Längsseiten (10, 11) der Schiene (3) mindestens im Bereich des Schienensteges (5), dem Teil des Schienenkopfes (4) und dem Teil des Schienenfußes (6) ein den Spalt (8) umgebender von den Laschen (12, 13) begrenzter Hohlraum oder Kanal (15) gebildet wird, und
b. Stoßschweißen des Spaltes (8).

16. Verfahren nach einem der Ansprüche 14 oder 15, wobei das Stoßschweißen des Spaltes (8) mittels Lichtbogenschweißen erfolgt.

17. Verfahren nach einem der Ansprüche 14 bis 16, ferner umfassend die folgenden Schritte:
c. Anordnen eines Dämpfungsprofils (22) aus elastomerem Material unterhalb des Schienenfußes (6), wobei das Dämpfungsprofils (22) den Schienenfuß (6) zumindest teilweise, vorzugsweise bis zur Schweißmanschette (2), umgreift, und
d. Anordnen eines ersten Seitenprofils (23) aus elastomerem Material und eines zweiten Seitenprofils (24) aus elastomerem Material jeweils außerhalb des von der Schweißmanschette (2) abgedeckten Schienenbereichs und an die Schweißmanschette (2) angrenzend an einer ersten Längsseite (10) und einer zweiten Längsseite (11) der Schiene (3), und
e. Anordnen einer die Schweißmanschette (2) abdeckenden, vorzugsweise elektrisch isolierenden, Abdeckung (21) wobei die Abdeckung (21) sich in Längsrichtung der Schiene (3) beidseitig über die Schweißmanschette (2) hinaus erstreckt und die Seitenprofile (23, 24) in einem an die Schweißmanschette (2) jeweils angrenzenden Überlappungsbereich (26) mit abdeckt.

## Claims

1. Arrangement (1), comprising,
a) a rail (3) with a rail head (4), a rail web (5), and a rail foot (6), wherein in a gap region (7) the rail (3) has a gap (8) extending from the rail head (4) to the rail foot (6), to be closed, or closed, by welding, and
b) a welding collar (2), which flanks the rail (3) in the longitudinal direction on its two longitudinal sides (10, 11), in a region of the rail (9) comprising the gap region (7), bridges the gap (8), and is fixedly connected to the rail (3) on both sides of the gap (8) with respect to the longitudinal direction of the rail (3), wherein
the welding collar (2) comprises a first plate (12), flanking the rail (3) on its first longitudinal side (10) in the longitudinal direction, and a second plate (13), flanking the rail (3) on its second longitudinal side (11) in the longitudinal direction, and wherein outside the gap region (7) the first plate (12) and the second plate (13) in each case fit against at least the rail web (5), a part of the rail head (4), and a part of the rail foot (6), and in the gap region (7) are in each case spaced apart from the rail web (5), and the part of the rail head (4), so that in the gap region (7) a cavity or channel (15) surrounding the gap (8) and bounded by the plates (12, 13) is formed on both longitudinal sides (10, 11) of the rail (3), at least in the region of the rail web (5), and the part of the rail head (4).

2. Arrangement (1) according to Claim 1, wherein
the first plate (12) and the second plate (13) fit against the rail web (5), at least a part of the underside (43) of the rail head (4), and a part of the rail foot (6), and in the gap region (7) are in each case spaced apart from the rail web (5), the part of the underside (43) of the rail head (4) and the part of the rail foot (6), so that in the gap region (7), a cavity or channel (15) surrounding the gap (8) and bounded by the plates (12, 13) is formed on both longitudinal sides (10, 11) of the rail (3), at least in the region of the rail web (5), the part of the rail head (4), and the part of the rail foot (6).

3. Arrangement (1) according to one of the Claims 1 or 2, wherein the rail (3):
a. is a Vignole rail, and the first and second plates (12, 13) are designed with mirror symmetry relative to each other, or
b. is a grooved rail, wherein
the rail head (4) comprises a running rail (31) with a running rail head (41), and a guide rail (32) with a guide rail head (42), together with a groove (14) formed between the running rail (31) and the guide rail (32), and wherein
the first plate (12) is adapted to the groove-side contour of the rail (3), and the second plate (13) is adapted to the running head-side contour of the rail (3).

4. Arrangement (1) according to one of the preceding claims, wherein in the gap region (7) the first and second plates (12, 13) in each case have a recess (16) in their surface directed towards the rail.

5. Arrangement (1) according to one of the preceding claims, wherein the plates (12, 13) are in each case designed in one piece or in several pieces, preferably in several pieces.

6. Arrangement (1) according to one of the preceding claims, wherein the welding collar (2) is fixedly connected to the rail (3) by means of a bolted joint (17), or by means of a welded joint.

7. Arrangement (1) according to one of the preceding claims, further comprising a damping profile (22) of elastomeric material, arranged underneath the rail foot (6) and surrounding the rail foot (6) at least partially, preferably at least up to the welding collar (2).

8. Arrangement (1) according to one of the preceding claims, further comprising a covering (21) covering the welding collar (2).

9. Arrangement (1) according to Claim 8, wherein outside the region of the rail covered by the welding collar (2), and adjacent to the welding collar (2), the rail (3) has a first side profile (23) of elastomeric material on its first longitudinal side (10), and a second side profile (24) of elastomeric material on its second longitudinal side (11), and wherein the covering (21) extends in the longitudinal direction of the rail (3), on both sides beyond the welding collar (2), and also covers the side profiles (23, 24) in an overlapping region (26), in each case adjacent to the welding collar (2).

10. Welding collar (2) for the butt welding of a gap (8) in a rail (3), wherein the rail has a rail head (4), a rail web (5) and a rail foot (6), together with a gap region (7), with a gap (8), extending from the rail head (4) to the rail foot (6), to be closed by welding, comprising a first plate (12) and a second plate (13), which are shaped and configured such that the first plate (12) can be fitted against a first longitudinal side (10), and the second plate (13) can be fitted against a second longitudinal side (11), of the rail (3) comprising the gap region (7), such that in the fitted state the plates (12, 13) in each case fit against both sides of the gap region (7), at least on the rail web (3), on part of the rail head (4), and on part of the rail foot (6), and in the gap region (7) are in each case spaced apart from the rail web (5) and the part of the rail head (4), so that in the fitted state a cavity or channel (15) is formed in the gap region (7), surrounding the gap (8) and bounded by the plates (12, 13), on both longitudinal sides (10, 11) of the rail, at least in the region of the rail web (5) and the part of the rail head (4).

11. Welding collar (2) according to Claim 10, wherein the first plate (12) and the second plate (13) can be fitted against the rail (3) such that on both sides of the gap region (7), in the fitted state, the plates (12, 13) in each case fit at least against the rail web (5), a part of the rail head (4), and a part of the rail foot (6), and in the gap region (7) are in each case spaced apart from the rail web (5), the part of the rail head (4), and the part of the rail foot (6), so that the cavity or channel (15) is formed along the gap (8) in the region of the rail web (5), the part of the rail head (4), and the part of the rail foot.

12. Welding collar according to Claim 10 or 11, wherein each of the plates (12, 13) has a recess (16), which is arranged such that, in the fitted state of the welding collar (2), in each case it comes to lie in the gap region (7) so as to form the cavity or channel (15) there.

13. Welding collar according to Claim 10 or 12, wherein the plates (12, 13) are designed in one piece, or in several pieces, preferably in several pieces.

14. Method for butt welding a gap (8) in a rail (3), comprising the following steps:
a. Arrangement and fixing of a welding collar (2), according to one of the Claims 10 to 13, on the longitudinal sides (10, 11) of a rail (3), wherein in a gap region (7), the rail (3) has a gap (8) extending from the rail head (4) to the rail foot (6), which is to be closed, or is closed, by welding, so that the plates (12, 13) along the sides of the rail (3), on both sides of the gap region (7), in each case fit at least against the rail web (5), a part of the rail head (4), and a part of the rail foot (6), such that in the gap region (7) a cavity or channel (15) surrounding the gap (8) and bounded by the plates (12, 13) is formed on both longitudinal sides (10, 11) of the rail (3), at least in the region of the rail web (5), and the part of the rail head (4), and
b. Butt welding of the gap (8).

15. Method according to Claim 14, comprising the following steps:
a. Arrangement and fixing of a welding collar (2), according to one of the Claims 10 to 13, on the longitudinal sides (10, 11) of a rail (3), in the gap region (7), so that the plates (12, 13) along the longitudinal sides of the rail (3), on both sides of the gap region (7), in each case at least fit against the rail web (5), the part of the rail head (4), and a part of the rail foot (6), such that in the gap region (7) a cavity or channel (15) surrounding the gap (8) and bounded by the plates (12, 13) is formed on both longitudinal sides (10, 11) of the rail (3), at least in the region of the rail web (5), the part of the rail head (4) and the part of the rail foot (6), and
b. Butt welding of the gap (8).

16. Method according to one of the Claims 14 or 15, wherein the butt welding of the gap (8) takes place by means of arc welding.

17. Method according to one of the Claims 14 to 16, further comprising the following steps:
c. Arrangement of a damping profile (22) of elastomeric material underneath the rail foot (6), wherein
the damping profile (22) encompasses the rail foot (6) at least partially, preferably up to the welding collar (2), and
d. Arrangement of a first side profile (23) of elastomeric material, and a second side profile (24) of elastomeric material, in each case outside the region of the rail covered by the welding collar (2), and adjacent to the welding collar (2), on a first longitudinal side (10) and a second longitudinal side (11) of the rail (3), and
e. Arrangement of a preferably electrically insulating covering (21), covering the welding collar (2), wherein the covering (21) extends in the longitudinal direction of the rail (3), on both sides, beyond the welding collar (2), and also covers the side profiles (23, 24) in an overlapping region (26), in each case adjacent to the welding collar (2).

## Revendications

1. Ensemble (1) comprenant :
a) un rail (3) avec une tête de rail (4), une âme de rail (5) et un patin de rail (6), dans lequel, dans une région de fente (7), le rail (3) présente une fente (8) fermée ou destinée à être fermée par soudage, laquelle s'étend de la tête de rail (4) au patin de rail (6), et
b) un manchon de soudage (2), lequel borde le rail (3) dans le sens longitudinal sur les deux côtés longitudinaux (10, 11) de celui-ci dans une région de rail (9) comportant la région de fente (7), enjambe la fente (8) et est relié fixement au rail (3) des deux côtés de la fente (8) par rapport au sens longitudinal du rail (3), dans lequel le manchon de soudage (2) comporte une première languette (12) bordant le rail (3) dans le sens longitudinal sur le premier côté longitudinal (10) de celui-ci et une deuxième languette (13) bordant le rail (3) dans le sens longitudinal sur le deuxième côté longitudinal (11) de celui-ci, et dans lequel la première languette (12) et la deuxième languette (13) s'appliquent respectivement à l'extérieur de la région de fente (7) au moins sur l'âme de rail (5), une partie de la tête de rail (4) et une partie du patin de rail (6), tout en étant respectivement espacées de l'âme de rail (5) et de la partie de la tête de rail (4) dans la région de fente (7), de manière à former un espace creux ou un canal (15) délimité par les languettes (12, 13) et entourant la fente (8) dans la région de fente (7), sur les deux côtés longitudinaux (10, 11) du rail (3), au moins dans la région de l'âme de rail (5) et de la partie de la tête de rail (4).

2. Ensemble (1) selon la revendication 1, dans lequel la première languette (12) et la deuxième languette (13) s'appliquent sur l'âme de rail (5), au moins une partie de la face inférieure (43) de la tête de rail (4) et une partie du patin de rail (6), tout en étant respectivement espacées de l'âme de rail (5), de la partie de la face inférieure (43) de la tête de rail (4) et de la partie du patin de rail (6) dans la région de fente (7), de manière à former un espace creux ou un canal (15) délimité par les languettes (12, 13) et entourant la fente (8) dans la région de fente (7), sur les deux côtés longitudinaux (10, 11) du rail (3), au moins dans la région de l'âme de rail (5), de la partie de la tête de rail (4) et de la partie du patin de rail (6).

3. Ensemble (1) selon l'une des revendications 1 et 2, dans lequel le rail (3)
a. est un rail Vignole et les première et deuxième languettes (12, 13) sont conçues symétriquement l'une par rapport à l'autre, ou
b. est un rail à gorge, dans lequel la tête de rail (4) comporte un rail de roulement (31) avec une tête de rail de roulement (41) et un rail de guidage (32) avec une tête de rail de guidage (42), ainsi qu'une gorge (14) formée entre le rail de roulement (31) et le rail de guidage (32), et dans lequel la première languette (12) est adaptée au contour côté gorge du rail (3) et la deuxième languette (13) est adaptée au contour côté tête de roulement du rail (3).

4. Ensemble (1) selon l'une des revendications précédentes, dans lequel, dans la région de fente (7), les première et deuxième languettes (12, 13) présentent respectivement un évidement (16) dans leur surface orientée vers le rail.

5. Ensemble (1) selon l'une des revendications précédentes, dans lequel les languettes (12, 13) sont conçues respectivement en une seule pièce ou en plusieurs pièces, de préférence en plusieurs pièces.

6. Ensemble (1) selon l'une des revendications précédentes, dans lequel le manchon de soudage (2) est relié fixement au rail (3) à l'aide d'un assemblage fileté (17) ou d'un assemblage par soudage.

7. Ensemble (1) selon l'une des revendications précédentes, comportant en outre un profilé d'amortissement (22) constitué d'une matière élastomère, lequel est disposé sous le patin de rail (6) et entoure au moins partiellement le patin de rail (6), de préférence au moins jusqu'au manchon de soudage (2).

8. Ensemble (1) selon l'une des revendications précédentes, comportant en outre un recouvrement (21) recouvrant le manchon de soudage (2).

9. Ensemble (1) selon la revendication 8, dans lequel le rail (3) présente, à côté du manchon de soudage (2), à l'extérieur de la région de rail recouverte par le manchon de soudage (2), un premier profilé latéral (23) constitué d'une matière élastomère sur son premier côté longitudinal (10), ainsi qu'un deuxième profilé latéral (24) constitué d'une matière élastomère sur son deuxième côté longitudinal (11), et dans lequel le recouvrement (21) s'étend des deux côtés dans le sens longitudinal du rail (3) au-delà du manchon de soudage (2) et recouvre les profilés latéraux (23, 24) dans une région de chevauchement (26) respectivement adjacente au manchon de soudage (2).

10. Manchon de soudage (2) pour le soudage bout-à-bout d'une fente (8) dans un rail (3), dans lequel le rail présente une tête de rail (4), une âme de rail (5) et un patin de rail (6) ainsi qu'une région de fente (7) avec une fente (8) destinée à être fermée par soudage, laquelle s'étend de la tête de rail (4) au patin de rail (6), comportant une première languette (12) et une deuxième languette (13) formées et conçues de telle façon que la première languette (12) peut être appliquée sur un premier côté longitudinal (10) et la deuxième languette (13) sur un deuxième côté longitudinal (11) du rail (3) comportant la région de fente (7), de telle façon que dans l'état appliqué, les languettes (12, 13) s'appliquent respectivement des deux côtés de la région de fente (7) au moins sur l'âme de rail (5), une partie de la tête de rail (4) et une partie du patin de rail (6), et sont espacées respectivement dans la région de fente (7) de l'âme de rail (5) et de la partie de la tête de rail (4), de telle façon que dans l'état appliqué, un espace creux ou un canal (15) délimité par les languettes (12, 13) et entourant la fente (8) est formé au moins dans la région de l'âme de rail (5) et de la partie de la tête de rail (4), sur les deux côtés longitudinaux (10, 11) du rail dans la région de fente (7).

11. Manchon de soudage (2) selon la revendication 10, dans lequel la première languette (12) et la deuxième languette (13) peuvent être appliquées de telle façon sur le rail (3), que dans l'état appliqué, les languettes (12, 13) s'appliquent respectivement au moins sur l'âme de rail (5), une partie de la tête de rail (4) et une partie du patin de rail (6), des deux côtés de la région de fente (7), et sont respectivement espacées de l'âme de rail (5), de la partie de la tête de rail (4) et de la partie du patin de rail (6) dans la région de fente (7), de manière à former un espace creux ou un canal (15) le long de la fente (8) dans la région de l'âme de rail (5), de la partie de la tête de rail (4) et de la partie du patin de rail.

12. Manchon de soudage selon la revendication 10 ou 11, dans lequel chacune des languettes (12, 13) présente un évidement (16) disposé de manière à venir se placer respectivement dans la région de fente (7) dans l'état appliqué du manchon de soudage (2), pour y former l'espace creux ou la canal (15).

13. Manchon de soudage selon la revendication 10 ou 12, dans lequel les languettes (12, 13) sont conçues en une seule pièce ou en plusieurs pièces, de préférence en plusieurs pièces.

14. Procédé pour le soudage bout-à-bout d'une fente (8) dans un rail (3), comprenant les étapes suivantes :
a. disposition et fixation d'un manchon de soudage (2) selon l'une des revendications 10 à 13 sur les côtés longitudinaux (10 11) d'un rail (3), dans lequel, dans une région de fente (7), le rail (3) présente une fente (8) fermée ou destinée à être fermée par soudage, laquelle s'étend de la tête de rail (4) au patin de rail (6), de sorte que les languettes (12, 13) s'appliquent le long du rail (3) des deux côtés de la région de fente (7) respectivement au moins sur l'âme de rail (5), une partie de la tête de rail (4) et une partie du patin de rail (6), de manière à former un espace creux ou un canal (15) délimité par les languettes (12, 13) et entourant la fente (8) dans la région de fente (7), sur les deux côtés longitudinaux (10, 11) du rail (3), au moins dans la région de l'âme de rail (5) et de la partie de la tête de rail (4), et
b. soudage bout-à-bout de la fente (8).

15. Procédé selon la revendication 14, comprenant les étapes suivantes :
a. disposition et fixation d'un manchon de soudage (2) selon l'une des revendications 10 à 13 sur les côtés longitudinaux (10, 11) du rail (3) dans la région de fente (7), de sorte que les languettes (12, 13) s'appliquent le long du rail (3) des deux côtés de la région de fente (7) au moins sur l'âme de rail (5), la partie de la tête de rail (4) et une partie du patin de rail (6), de manière à former un espace creux ou un canal (15) délimité par les languettes (12, 13) et entourant la fente (8) dans la région de fente (7), sur les deux côtés longitudinaux (10, 11) du rail (3), au moins dans la région de l'âme de rail (5), de la partie de la tête de rail (4) et de la partie du patin de rail (6), et
b. soudage bout-à-bout de la fente (8).

16. Procédé selon l'une des revendications 14 et 15, dans lequel le soudage bout-à-bout de la fente (8) est réalisé par soudage à l'arc.

17. Procédé selon l'une des revendications 14 à 16, comprenant en outre les étapes suivantes :
c. disposition d'un profilé d'amortissement (22) constitué d'une matière élastomère sous le patin de rail (6), le profilé d'amortissement (22) encerclant au moins partiellement le patin de rail (6), de préférence jusqu'au manchon de soudage (2), et
d. disposition d'un premier profilé latéral (23) constitué d'une matière élastomère et d'un deuxième profilé latéral (24) constitué d'une matière élastomère respectivement à l'extérieur de la région de rail recouverte par le manchon de soudage (2) et sur un premier côté longitudinal (10) et un deuxième côté longitudinal (11) du rail (3) à côté du manchon de soudage (2), et
e. disposition d'un recouvrement (21) recouvrant le manchon de soudage (2), de préférence électriquement isolant, le recouvrement (21) s'étendant au-delà du manchon de soudage (2) des deux côtés dans le sens longitudinal du rail (3) et recouvrant également les profilés latéraux (23, 24) dans une région de chevauchement (26) respectivement adjacente au manchon de soudage (2).
